# EUROPÄISCHE PATENTANMELDUNG

(11) **EP 1 282 087 A1**
(43) Veröffentlichungstag der Anmeldung: **05.02.2003**
(21) Anmeldenummer: 01440252.3
(22) Anmeldetag: 02.08.2001
(51) Int. Cl.: G07F 7/08, G07F 19/00

(54) **Verfahren zur Durchführung von Transaktionen von elektronischen Geldbeträgen zwischen Teilnehmerendgeräten eines Kommunikationsnetzes, Transaktionsserver und Programmmodul hierfür**

(71) Anmelder: ALCATEL, 75008 Paris (FR)
(72) Erfinder: Weik, Hartmut, 70195 Stuttgart (DE); Lautenschlager, Wolfgang, 71287 Weissach (DE)
(74) Vertreter: Brose, Gerhard

(57) **Zusammenfassung**

Die Erfindung betrifft ein Verfahren zur Durchführung von Transaktionen von elektronischen Geldbeträgen zwischen Teilnehmerendgeräten (MS1, MS2) eines Kommunikationsnetzes (CN), mit den Schritten Herstellen einer Kommunikationsverbindung zwischen einem an einer Transaktion beteiligten zahlenden Teilnehmerendgerät (MS1) mit einem Transaktionsserver (FS), Herstellen einer Kommunikationsverbindung zwischen einem an einer Transaktion beteiligten empfangenden Teilnehmerendgerät (MS2) mit einem Transaktionsserver (FS), Empfangen von Daten zur Ermittlung des zahlenden Teilnehmerendgeräts (MS1), des empfangenen Teilnehmerendgeräts (MS2) und des zu transferierenden Geldbetrags im Transaktionsserver (FS) und Abbuchen des genannten Geldbetrags von einem Geldspeicher (M1) des zahlenden Teilnehmerendgerät (MS1) und Aufbuchen dieses Geldbetrags auf einen Geldspeicher (M2) des empfangenden Endgeräts (MS2) unter Vermittlung des Transaktionsservers, sowie ein Kommunikationsnetz (CN), einen Transaktionsserver (FS) und Programmmodul hierfür.

## Beschreibung

Die Erfindung betrifft ein Verfahren zur Durchführung von Transaktionen von elektronischen Geldbeträgen zwischen Teilnehmerendgeräten eines Kommunikationsnetzes, sowie ein Kommunikationsnetz, einen Transaktionsserver und ein Programmmodul zum Ablauf in einem Transaktionsserver hierfür.

Seit einiger Zeit sind eine Anzahl von Verfahren bekannt, die es erlauben, Geldbeträge elektronisch von einem Girokonto zu einem anderen Girokonto zu transferieren. Dazu werden meist magnetisch gespeicherte Daten einer entsprechenden Bankkarte eines Käufers in ein Verkäuferterminal eingelesen und der zu transferierende Betrag in das Verkäuferterminal eingegeben. Das Verkäuferterminal kontaktiert dann einen Finanzserver und übermittelt relevante ldentifizierungs- und Transaktionsdaten. Nach Prüfung dieser Daten veranlaßt der Finanzserver die Abbuchung vom Girokonto des Käufers und die Aufbuchung auf das Girokonto des Verkäufers. Dieses oder ähnliche Verfahren weisen einen hohen Sicherheitsstandard auf, da die Girokonten, der Finanzserver und in gewissem Maße auch das Verkäuferterminal sicher vor Manipulationen sind. Außerdem werden alle Buchungen protokolliert und können daher nachvollzogen werden. Allerdings haben diese Verfahren den Nachteil, dass spezielle Verkäuferterminals notwendig sind. Außerdem finden zeitaufwendige Prüfungen und Verifikationen statt, beispielsweise eine Prüfung der Liquidität des Käufers.

Zur Bezahlung von kleineren Geldbeträgen existieren sogenannte Geldkarten, welche an bestimmten Geldterminals von Banken gegen Abbuchung von einem Girokonto aufgeladen werden können. Die Abbuchung von elektronischem Geld der Geldkarte auf ein zentrales Konto des Verkäufers erfolgt an dafür vorgesehenen Verkäuferterminals. Diese Geldkarten besitzen einen elektronischen Chip min einem Mikrorechner und einem gegen unberechtigten Zugriff geschützten Speicher, auf welchem Geldbeträge auf- und abgebucht werden können. Die Kommunikation zwischen Geldterminal und Geldkarte einerseits und Verkäuferterminal und Geldkarte andererseits läuft gesichert ab, d.h. die Nutzdaten werden mit Sicherungsdaten versehen und verschlüsselt. Außerdem findet auch hier eine Protokollierung und eine in der Regel tägliche Überprüfung der Transaktionssummen statt.

Zum Bezahlen mittels eines Mobilfunkgeräts ist ein Verfahren bekannt, bei welchem für Kunden eines Anbieters eines elektronischen Bezahldienstes elektronische Konten auf einem Server eingerichtet werden. Dieser Server ist über das Mobilfunknetz erreichbar. Zur Durchführung einer Geldtransaktion stellt ein bezahlender Teilnehmer eine Verbindung zu diesem Server her und übermittelt die Mobilfunk-Rufnummer des Mobilfunkgeräts eines empfangenden Teilnehmers und einen Geldbetrag. Dieser Geldbetrag wird von seinem Konto abgebucht und dem Konto des empfangenden Teilnehmers gutgeschrieben. Das Mobilfunkgerät des empfangenden Teilnehmer erhält anschließend eine Nachricht des Servers, beispielsweise in Form einer sogenannten Kurznachricht des Mobilfunk-Kurznachrichtendienstes (engl.: short message service).

Die Patentanmeldung W099/00773 mit dem Titel "Transaktionsverfahren mit einem Mobilfunkgerät" beschreibt ein Verfahren, bei dem elektronische Geldbeträge von einer Geldspeicherkarte eines Mobilfunkgeräts auf ein Konto eines Verkäufers transferiert werden können. Dazu vermindert ein geschützter Rechner der Geldspeicherkarte den gespeicherten Geldbetrag um einen bestimmten Transaktionsbetrag, erstellt einen digitalen manipulationssicheren Transaktionsbeleg und fügt dem Transaktionsbeleg eine digitale Signatur an. Dieser signierte Transaktionsbeleg wird dann an das Verkäuferterminal gesendet. Das Verkäuferterminal prüft die Signatur, fügt eine weitere digitale Signatur an und sendet diese Daten an einen Finanzserver, der die Signaturen und den Transaktionsbeleg prüft. Anschließend veranlaßt der Finanzserver eine Aufbuchung des Geldbetrages auf ein Konto des Verkäufers. Zur Sicherung gegen Manipulationen kann eine Abbuchung auf einem Kundenprüfkonto durchgeführt werden. Die genannte Patentanmeldung beschreibt weiter ein Verfahren, bei welchen die genannte Geldspeicherkarte des Mobilfunkgeräts über das Mobilfunknetz aufgeladen werden kann.

Allen aufgeführten Verfahren ist gemein, dass bei einer Transaktion eines Geldbetrags von einem Teilnehmer zu einem anderen Teilnehmer zentral oder netzseitig verwaltete Konten notwendig sind. Dies bedeutet einen hohen Kommunikations- und Verwaltungsaufwand.

Der Erfindung liegt die Aufgabe zugrunde, ein komfortables und transparentes Verfahren für Teilnehmer eines Kommunikationsnetzes und die zu seiner Ausführung erforderlichen Mittel schaffen, welche es erlauben, Geldbeträge direkt von einem Teilnehmer zu einem anderen Teilnehmer zu transferieren.

Erfindungsgemäß wird diese Aufgabe durch ein Verfahren nach der Lehre des Anspruchs 1, ein Kommunikationsnetz nach der Lehre des Anspruchs 10, einen Transaktionsserver nach der Lehre des Anspruchs 11 und ein Programmmodul nach der Lehre des Anspruchs 12 gelöst.

Grundgedanke der Erfindung ist es, analog der Transaktion von Geldmünzen und Geldscheinen bei herkömmlichen Bezahlvorgängen, elektronische Geldbeträge einer elektronischen Geldbörse eines Kunden oder zahlenden Teilnehmers eines Kommunikationsnetzes zu entnehmen und einer Geldbörse eines Verkäufers oder empfangenden Teilnehmers zuzuführen. Als elektronische Geldbörse dient dabei jeweils ein Geldspeicher eines zahlenden und eines empfangenden Teilnehmerendgeräts eines Kommunikationsnetzes. Dazu wird jeweils eine Kommunikationsverbindung zwischen einem zahlenden Teilnehmerendgerät und einem empfangenen Teilnehmer mit einem Transaktionsserver hergestellt. Über diese Kommunikationsverbindungen empfängt der Transaktionsserver Daten zur Ermittlung der Identität der an einer Transaktion beteiligten Teilnehmer und Daten, die es ermöglichen, einen eindeutigen zu transferierenden elektronischen Geldbetrag und eine eindeutige Bezahlrelation, d.h. genau ein zahlendes Teilnehmerendgerät und ein empfangendes Teilnehmerendgerät zu ermitteln. Anschließend wird unter Vermittlung des Transaktionsservers der genannte Geldbetrag vom Geldspeicher des zahlenden Teilnehmerendgerät abgebucht und der Geldspeicher des empfangenden Endgeräts mit diesem Geldbetrag aufgeladen.

Weitere vorteilhafte Ausgestaltungen der Erfindung sind den abhängigen Ansprüchen und der Beschreibung zu entnehmen.

Im folgenden wird die Erfindung unter Zuhilfenahme der Zeichnung weiter erläutert:

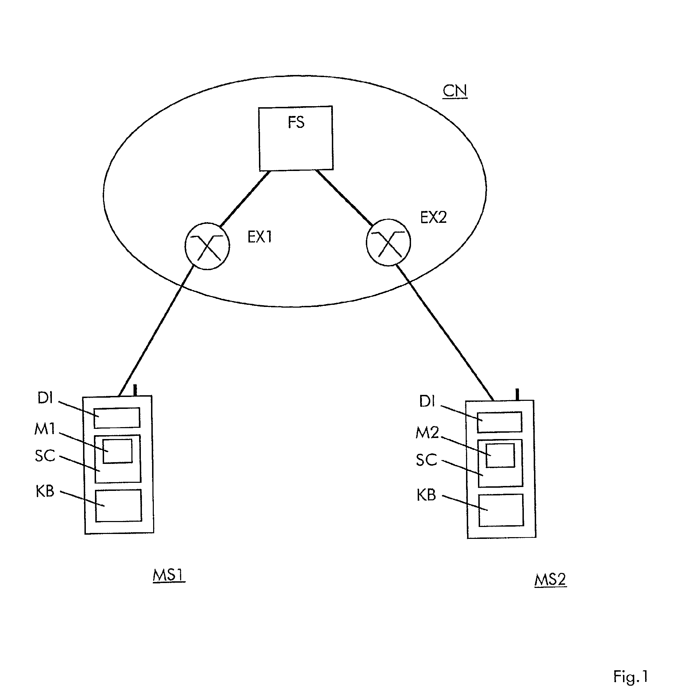

- Fig.1: zeigt schematisch ein erfindungsgemäßes Kommunikationsnetz zur Ausführung des erfindungsgemäßen Verfahrens.

Fig.1 zeigt ein Mobilfunknetz CN, welches beispielhaft eine erste (Mobilfunk-) Vermittlungsstelle EX1 (engl.: mobile switching center, MSC) und eine zweite Vermittlungsstelle EX2 und weiter einen Transaktionsserver FS aufweist. Ein erstes (Mobilfunk-) Endgerät MS1 ist über eine Luftschnittstelle und eine hier nicht dargestellte Funkbasisstation (engl.: base station center, BSC) beispielhaft mit der ersten Vermittlungsstelle EX1 verbunden. Ein zweites Endgerät MS2 ist beispielhaft mit der zweiten Vermittlungsstelle EX2 verbunden. Der Transaktionsserver FS ist jeweils mit der ersten Vermittlungsstelle EX1 und der zweiten Vermittlungsstelle EX2 verbunden. Beispielhaft für das erste Endgerät ist ein Display Dl, eine erste (intelligente) Speicherkarte SC1 und eine Tastatur KB eingezeichnet. Die erste Speicherkarte SC1 beinhaltet einen hier nicht dargestellten Mikrorechner und einen ersten Speicher M1. Analog dazu weist das zweite Endgerät MS2 eine zweite Speicherkarte SC2 mit einem entsprechenden zweiten Speicher M2 auf.

Der Transaktionsserver FS kann mehrere Kommunikationsverbindungen gleichzeitig terminieren. Er stellt hier eine sichere dritte Instanz dar, die vor möglichen Manipulationen der Teilnehmer von Transaktionen gesichert ist.

Das Mobilfunknetz CN stellt beispielsweise ein digitales Kommunikationsnetz nach dem weit verbreiteten GSM-Standard (engl.: Global System for Mobile Communication) dar. Bei einem solchen Kommunikationsnetz wird die Identität jedes Endgeräts (häufig auch Authentitätsprüfung der entsprechenden Teilnehmer genannt) vor Aufbau einer Verbindung geprüft. Dies geschieht mittels kryptographischer Methoden in Zusammenarbeit des Endgeräts und weiteren Netzkomponenten. Jedes Endgerät ist dazu mit einer in der Regel steckbaren sogenannten SlM-Karte (SIM = Subscriber ldentication Module) versehen. Die SlM-Karte weist einen Mikrorechner mit einem (kleinen) Betriebssystem und einen Speicher auf, in welchem ein geheimer, nicht auslesbarer digitaler Schlüssel abgelegt ist. Eine Kopie dieses Schlüssels besitzt nur eine zentrale Authentisierungseinrichtung (engl.: authentication center) des Mobilfunknetzes CN. Mit Hilfe dieses Schlüssels und einer von der Authentisierungseinrichtung für jede Verbindung neu generierte Zufallszahl wird im Endgerät ein aktueller Schlüssel zur Verschlüsselung der Nutzdaten berechnet. Diese SlM-Karte kann zusätzlich als Geldspeicherkarte SC1 oder SC2 verwendet werden. Alternativ wird die Geldspeicherkarte SC1 oder SC2 als separate zusätzlich in ein Mobilfunkendgerät einsteckbare oder mit diesem verbindbare Karte realisiert.

Der Transaktionsserver FS kann aus einem zentralen Rechner mit Hardund Software oder einem Rechnerverbund oder aus mehreren dezentralen miteinander kommunizierenden Rechnern bestehen. Insbesondere können verschiedene Aufgaben, beispielsweise die Dienstesteuerung, die Datenverwaltung, die Teilnehmerkommunikation, die Generierung gesicherter Transaktionsdaten und eine optional durchgeführte Verschlüsselung, Entschlüsselung, Signatur oder Signaturkontrolle jeweils physikalisch verschiedenen Rechnern zugewiesen werden.

Im Folgenden soll Ausführungsbeispiel für ein erfindungsgemäßes Verfahren anhand eines ein funktionaler Kommunikationsablaufs zwischen den an einer Geldtransaktion beteiligten Einrichtungen beschrieben werden. Dabei soll zur Sprachvereinfachung sowohl eine teilnehmende Person als auch das von dieser Person benutzte Teilnehmerendgerät einfach als Teilnehmer bezeichnet werden.
- ein erster Teilnehmer MS1 wählt eine Rufnummer des Transaktionsservers FS,
- die erste Vermittlungsstelle EX1 stellt eine Kommunikationsverbindung zwischen dem ersten Teilnehmer MS1 und dem Transaktionsserver FS her,
- der Transaktionsserver FS empfängt von der ersten Vermittlungsstelle EX1 Daten zur Identifizierung des ersten Teilnehmers MS1 und vom ersten Teilnehmer MS1 zur Transaktionsberechtigung ein Paßwort oder eine ldentifizierungsnummer (auf diese Prüfung könnte verzichtet werden, wenn keine hohen Sicherheitsanforderungen gestellt werden; in diesem Fall reicht die oben beschriebene Identifizierungsprüfung des Mobilfunknetzes aus),
- der erste Teilnehmer MS1 übermittelt die Rufnummer oder einen eindeutigen Namen eines zweiten Teilnehmers MS2 und einen von seinem Endgerät an dieses Endgerät zu transferierenden Geldbetrag,
- der Transaktionsserver FS veranlaßt, nach positiver Paßwortprüfung, die Herstellung einer Kommunikationsverbindung über die zweite Vermittlungsstelle EX2 zum zweiten Teilnehmer MS2,
- der Transaktionsserver FS empfängt, optional nach einer analog der genannten Berechtigungsprüfung für diesen Teilnehmer erfolgten Berechtigungsprüfung, den erwünschten Geldbetrag vom zweiten Teilnehmer MS2; alternativ dazu übermittelt der Transaktionsserver FS den vom ersten Teilnehmer angegebenen Geldbetrag und erbittet eine Bestätigungsmeldung,
- der Transaktionsserver FS prüft den vom ersten Teilnehmer MS1 übermittelten Geldbetrag und den vom zweiten Teilnehmer MS2 übermittelten Geldbetrag auf Identität; alternativ prüft er die Bestätigungsmeldung des zweiten Teilnehmers MS2,
- im Falle der Identität (bzw. des Erhalts einer gültigen Bestätigungsmeldung) führt der Transaktionsserver FS ein Abbuchen des genannten Geldbetrags vom Geldspeicher M1 des zahlenden ersten Teilnehmers MS und Aufbuchen dieses Geldbetrags auf den Geldspeicher M2 des empfangenden zweiten Teilnehmers MS2 durch, und
- zumindest der erste Teilnehmer erhält eine vom Transaktionsserver FS signierte elektronische Quittung über Empfänger, Betrag und Zeit der Transaktion.

In einer vorteilhaften Ausführung werden alle wesentlichen zwischen den Teilnehmern und dem Transaktionsserver ausgetauschten Daten zur Sicherstellung ihrer Integrität und Authentizität signiert. Die Signatur kann dabei mittels bekannter Verfahren, beispielsweise mittels eines asymmetrischen Schlüsselverfahrens durchgeführt werden.

Der Transfer des elektronischen Geldes kann auf unterschiedliche Weise stattfinden. Ein mögliches einfaches Verfahren besteht darin, das der Transaktionsserver FS vor dem Abbuchen vom Geldspeicher M1 des ersten Teilnehmers MS1 zunächst einen elektronisch vom ersten Teilnehmer MS1 signierten Datensatz mit seinem aktuellen Kontostand erhält. Dieser Datensatz enthält weiter einen Transaktionszähler, welcher nach jeder Transaktion erhöht wird und im Transaktionsserver FS abgespeichert (mitgeführt) wird und eine Signatur des Transaktionsservers FS, welche eine unbemerkte Manipulation dieser Daten ausschließt. Der Transaktionsserver überprüft zunächst die Signatur des ersten Teilnehmers MS1 zur Sicherstellung der Integrität des genannten Datensatzes (d.h. Prüfung ob der vom ersten Teilnehmer MS1 gesendete Datensatz unverfälscht empfangen wurde). Dann folgt die Prüfung des Datensatzes selber, zunächst der Signatur des Transaktionsservers (d.h. Prüfung ob die Daten vom ersten Teilnehmer MS1 verändert wurden) und dann des Transaktionszählers (Prüfung, ob der aktuelle Datensatz übermittelt wurde) Weiter wird dann geprüft, ob der Kontostand ausreicht, um die gewünschte Summe abbuchen zu können (Frage nach der Kreditlinie). Wenn alle Prüfungen positiv abgeschlossen werden, erfolgt die Abbuchung des Geldbetrags dadurch, das der Transaktionsserver FS einen neuen Datensatz mit neuem Kontostand, welcher um den abgebuchten Betrag gegenüber dem alten Kontostand reduziert wurde, und einen Transaktionszähler mit dem Wert eins erhöhten Zählwert gegenüber dem alten Transaktionszähler an den ersten Teilnehmer MS1 übermittelt. Anschließend findet das Aufbuchen oder Aufladen des zweiten Geldspeichers M2 des zweiten Teilnehmers MS2 in einem analogen Verfahren statt.

Alternativ ist es möglich, die Transaktion mittels bekannter Verfahren zur Aufladung und der Belastung von sogenannten Geldkarten oder Smartcards durchzuführen. In der oben genannten Patentanmeldung W099/00773 werden detaillierte Ausführungsbeispiele sowohl zum Aufladen als auch zum Belasten einer SIM-Karte beschrieben.

Weiter ist es möglich, die Transaktion durch direktes Weiterleiten digitaler Geldeinheiten von einem zum anderen Teilnehmer durchzuführen. Dabei enthält jeder dieser Gelddatensätze eine digitalen Seriennummer und ist gegen Verfälschen mit einem Sicherungsdatum signiert. Die Teilnehmer können diese Signatur selbstständig prüfen (alternativ kann der Transaktionsserver FS diese Prüfung vornehmen). Der Transaktionsserver FS überwacht, dass dieser Datensatz nur einmal von einem bezahlenden Teilnehmer übermittelt wird, bis er wieder Empfänger dieses Datensatzes geworden ist. Bei positivem Prüfergebnis reicht der Transaktionsserver den entsprechenden Gelddatensatz unverändert an den empfangenden Teilnehmer weiter.

In einer weiteren Alternative rufen beide Teilnehmer MS1 und MS2 den Transaktionsserver FS an und übermitteln jeweils einen Geldbetrag, jeweils die Tatsache das sie Sender bzw. Empfänger dieses Geldbetrags sind, und jeweils die Rufnummer des Empfängers bzw. Senders. Der Transaktionsserver FS prüft alle diese Angaben auf Identität und führt, bei positiven Prüfergebnis, die weiteren Schritte zur Transaktion durch.

Die Kommunikation von den Teilnehmern MS1 und MS2 zum Transaktionsserver FS kann mittels Sprachkommunikation und/oder mittels Tastatureingabe jeweils in die Tastatur KB der Teilnehmer MS1 und MS2 erfolgen. Zur Spracherkennung führt der Transaktionsserver FS eine sogenannten speech-to-text-Umwandlung durch, welche die erhaltene Sprachinformation in digitale Information übersetzt. Die vom Transaktionsserver FS an die Teilnehmer MS1 und MS2 zu übermittelnden Informationen werden umgekehrt mittels einer sogenannten text-to-speech-Umwandlung in Sprache umwandelt und an diese Teilnehmer übermittelt.

Zur Erhöhung der Sicherheit kann vorgesehen werden, dass ein zur Transaktion bereiter Teilnehmer MS1 oder MS2 seinen Geldspeicher M1 bzw. M2 nur für eine bestimmte Zeitspanne (time-out) öffnet. So weist ein empfangender Teilnehmer nach dieser Zeitspanne eingehende Gelddaten zurück und sendet eine Entsprechende Meldung an den Transaktionsserver FS. Der Transaktionsserver kann dazu prüfen, ob diese Zeitspanne eingehalten wird.

Wenn die Teilnehmer MS1 und MS2 elektronische Geldkonten mit verschiedenen Währungen führen, so kann der Transaktionsserver FS automatisch eine Währungsumrechnung durchführen. Vorteilhafterweise informiert er beide Teilnehmer jeweils über die Beträge beider Währungen. Er kann auch einen Zwischenschritt durchführen, indem er von beiden Teilnehmer oder von demjenigen Teilnehmer, der einen vom anderen Teilnehmer erbetenen Geldbetrag bestätigen muss, eine Bestätigungsmeldung oder Akzeptanzmeldung fordert.

In einer vorteilhaften Variante stellt das Mobilfunknetz CN ein WAP-fähiges Mobilfunknetz dar. Dazu weist mindestens der erste Teilnehmer MS1 einen sogenannten micro browser auf, der es ihm ermöglichst, mittels des sogenannten Wireless Application Protocols (WAP) sogenannte WAP-Seiten von einem entsprechenden WAP-Server abzurufen. Der Transaktionsserver FS dient dabei als WAP-Server oder ist mit einem WAP-Server verbunden. Analog zu den bisher beschriebenen Ausführungen wird eine leitungsgebundene Kommunikationsverbindung zwischen dem Teilnehmer MS1 und dem Transaktionsserver FS (oder dem mit dem Transaktionsserver verbundenen WAP-Server) aufgebaut, über welche ein im folgenden beschriebene Datenverkehr abläuft. Der Teilnehmer MS1 fordert mittels seines Browsers eine bestimmte WAP-Seite an. Diese WAP-Seite enthält Eingabefelder, in welche der Teilnehmer MS1 beispielsweise sein Paßwort, den Geldbetrag und die Rufnummer oder WAP-Adresse des zweiten Teilnehmers eintragt. Diese Information wird (bei betätigen einer ReturnTaste oder anwählen einer bestimmten Bildschirmschaltfläche (OK-button) an den Transaktionsserver FS übermittelt. Analog dazu findet die weitere Kommunikation zwischen dem Transaktionsserver FS und dem ersten Teilnehmer MS1 statt. Die Kommunikation des Transaktionsservers FS mit dem zweiten Teilnehmers MS2 kann entweder konventionell oder ebenfalls mittels WAP-Seiten durchgeführt werden. Der Vorteil bei der WAP-Kommunikation besteht darin, dass alle für den Teilnehmer relevante Daten einfach auf dem Display Dl der Endgeräte angezeigt werden können.

Das erfindungsgemäße Verfahren ist unabhängig von der physikalischen Ausprägung oder von den Kommunikationsprotokollen des Kommunikationsnetzes CN. Vorteilhaft kann das erfindungsgemäße Verfahren vor allem in zukünftigen Mobilfunknetzen nach dem sogenannten UMTS-Standard (UMTS = Universal Mobile Telecommunications System) angewandt werden.

Das Verfahren kann auch ohne weiteres im öffentlichen Festnetz oder im Internet durchgeführt werden. Die Endgeräte dieser Netze weisen dabei entweder einen Steckplatz für eine SlM-Karte oder Smartkarte oder eine Schnittstelle auf, an welche ein gesondertes Schreib- und Lesegerät für solche Karten verbunden werden kann. Zusätzlich weisen diese Engeräte spezielle Kommunikationssoftware auf, um mit der SlM-Karte kommunizieren zu können.

Die Sicherheitsanforderungen für eine Ausführung des erfindungsgemäßen Verfahrens im Internet sind dabei höher als bei Ausführung des Verfahrens in einem leitungsgebundenen Netz. So ist die Gefahr von Lauschangriffen im Internet wesentlich höher als in leitungsgebundenen Netzen, höher als insbesondere im beschriebenen GSM-Netz, bei welchen wie beschrieben immer eine Identitätsprüfung des Teilnehmers erfolgt und alle Nutzdaten verschlüsselt übermittelt werden. Die Gefahr von Datenmanipulationen, d.h. Verändern, Unterdrücken oder Vielfach-Senden durch unbefugte Dritte ist damit im Internet deutlich höher. Diese Probleme lassen sich jedoch mittels bekannter leistungsfähiger Verschlüsselungsverfahren und Signaturverfahren lösen.

## Patentansprüche

1. Verfahren zur Durchführung von Transaktionen von elektronischen Geldbeträgen zwischen Teilnehmerendgeräten (MS1, MS2) eines Kommunikationsnetzes (CN), **dadurch gekennzeichnet, dass** es folgende Schritte aufweist:
• Herstellen einer Kommunikationsverbindung zwischen einem an einer Transaktion beteiligten zahlenden Teilnehmerendgerät (MS1) mit einem Transaktionsserver (FS),
• Herstellen einer Kommunikationsverbindung zwischen einem an einer Transaktion beteiligten empfangenden Teilnehmerendgerät (MS2) mit einem Transaktionsserver (FS),
• Empfangen von Daten zur Ermittlung des zahlenden Teilnehmerendgeräts (MS1), des empfangenden Teilnehmerendgeräts (MS2) und des zu transferierenden Geldbetrags im Transaktionsserver (FS) und
• Abbuchen des genannten Geldbetrags von einem Geldspeicher (M1) des zahlenden Teilnehmerendgeräts (MS1) und Aufbuchen dieses Geldbetrags auf einen Geldspeicher (M2) des empfangenden Endgeräts (MS2) unter Vermittlung des Transaktionsservers.

2. Verfahren nach Anspruch 1, **dadurch gekennzeichnet, dass** zunächst das zahlende Teilnehmerendgerät (MS1) eine Herstellung einer Kommunikationsverbindung mit dem Transaktionsserver (FS) veranlaßt und die Rufnummer des empfangenden Teilnehmers (MS2) übermittelt und der Transaktionsserver (FS) daraufhin die Herstellung einer Kommunikationsverbindung mit dem empfangenden Teilnehmer (MS2) veranlaßt.

3. Verfahren nach Anspruch 1, **dadurch gekennzeichnet, dass** der Transaktionsserver (FS) nach erfolgter Transaktion einen Transaktionsbeleg an das bezahlende Teilnehmerendgerät (MS1) übermittelt.

4. Verfahren nach Anspruch 3, **dadurch gekennzeichnet, dass** dieser Transaktionsbeleg eine digitale Signatur des Transaktionsservers (FS) aufweist.

5. Verfahren nach Anspruch 1, **dadurch gekennzeichnet, dass** zusätzlich zur Identifikation des zahlenden Teilnehmerendgeräts (MS1) Daten zur Authentifizierung des entsprechenden Teilnehmers, insbesondere ein Paßwort, an den Transaktionsserver (FS) übermittelt werden.

6. Verfahren nach Anspruch 1, **dadurch gekennzeichnet, dass** der Transaktionsbetrag dadurch festgestellt wird, dass jeder der Teilnehmerendgeräte (MS1, MS2) den zu zahlenden Betrag bzw. den zu empfangenen Betrag an den Transaktionsserver (FS) übermittelt und der Transaktionsserver vor der Transaktion prüft, ob die genannten Beträge identisch sind.

7. Verfahren nach Anspruch 1, **dadurch gekennzeichnet, dass** der Transaktionsbetrag dadurch festgestellt wird, dass einer der Teilnehmerendgeräte (MS1) den zu transferierenden Betrag an den Transaktionsserver (FS) übermittelt, der Transaktionsserver (FS) das andere Teilnehmerendgerät (MS2) über diesen Betrag informiert, welches eine Bestätigung dazu an den Transaktionsserver (FS) übermittelt.

8. Verfahren nach Anspruch 1, **dadurch gekennzeichnet, dass** die Teilnehmerendgeräte (MS1, MS2) Endgeräte eines WAP-fähigen Mobilfunknetzes darstellen und die Kommunikation zwischen dem Transaktionsserver (FS) und den Teilnehmerendgeräten (MS1, MS2) mittels WAP-Seiten erfolgt.

9. Verfahren nach Anspruch 1, **dadurch gekennzeichnet, dass** ein zur Transaktion bereiter Teilnehmer MS1 oder MS2 seinen Geldspeicher M1 bzw. M2 nur für eine bestimmte Zeitspanne öffnet

10. Kommunikationsnetz (CN) mit einem Transaktionsserver (FS) zur Vermittlung einer Transaktion von elektronischen Geldbeträgen zwischen Teilnehmerendgeräten (MS1, MS2) **dadurch gekennzeichnet, dass** folgenden Mittel vorhanden sind:
• Verbindungsherstellungsmittel zum Herstellen einer Kommunikationsverbindung zwischen einem zahlenden Teilnehmerendgerät (MS1) und dem Transaktionsserver (FS) einerseits und einer Kommunikationsverbindung zwischen einem empfangenden Teilnehmerendgerät (MS1) und dem Transaktionsserver (FS) andererseits,
• Empfangsmittel zum Empfang von Daten zur Ermittlung des zahlenden und des empfangenden Teilnehmerendgeräts (MS1, MS2), zum Empfang von Daten zum Ermitteln eines Transaktionsbetrags, und zum Empfang von elektronischem Geld,
• Sendemittel zum Weitergeben des empfangenen elektronischen Geldes.

11. Transaktionsserver (FT) zur Vermittlung einer Transaktion von elektronischen Geldbeträgen zwischen Teilnehmerendgeräten (MS1, MS2) **dadurch gekennzeichnet, dass** folgenden Mittel vorhanden sind:
• Schnittstelle zur Herstellung jeweils einer Kommunikationsverbindung zu einem zahlenden Teilnehmerendgerät (MS1) und einer Kommunikationsverbindung zu einem empfangenden Teilnehmerendgerät (MS2),
• Empfangsmittel zum Empfang von Daten zur Ermittlung des zahlenden und des empfangenden Teilnehmerendgeräts (MS1, MS2), zum Empfang von Daten zum Ermitteln eines Transaktionsbetrags, und zum Empfang von elektronischem Geld,
• Sendemittel zum Weitergeben des empfangenen elektronischen Geldes und

12. Programmmodul zum Ablauf in einem Diensterechner (FS) zur Vermittlung einer Transaktion von elektronischen Geldbeträgen zur Steuerung der folgenden Schritte:
• Herstellen einer Kommunikationsverbindung mit einem zahlenden Teilnehmerendgerät (MS1),
• Herstellen einer Kommunikationsverbindung mit einem empfangenden Teilnehmerendgerät (MS2),
• Empfangen von Daten zur Ermittlung des zahlenden Teilnehmerendgeräts (MS1), des empfangenen Teilnehmerendgeräts (MS2) und des zu transferierenden Geldbetrags durch den Transaktionsserver (FS) und
• Abbuchen des genannten Geldbetrags von einem Geldspeicher (M1) des zahlenden Teilnehmerendgerät (MS1) und Aufbuchen dieses Geldbetrags auf einen Geldspeicher (M2) des empfangenden Endgeräts (MS2) unter Vermittlung des Transaktionsservers.
